# EUROPÄISCHE PATENTSCHRIFT

(11) **EP 2 326 835 B1**
(45) Veröffentlichungstag und Bekanntmachung des Hinweises auf die Patenterteilung: **05.06.2013**
(21) Anmeldenummer: 09778031.6
(22) Anmeldetag: 21.08.2009
(51) Int. Cl.: F03D 7/04, H02J 3/46, H02J 3/38, F03D 7/02, H02J 13/00

(54) **VERFAHREN ZUR REGELUNG EINES WINDPARKS**
METHOD FOR CONTROLLING A WIND FARM
PROCÉDÉ DE RÉGULATION D'UN PARC ÉOLIEN

(30) Priorität: 23.08.2008 DE 102008039429
(43) Veröffentlichungstag der Anmeldung: 01.06.2011
(73) Patentinhaber: DeWind Co., Irvine, CA 92614 (US)
(72) Erfinder: STAPELFELDT, Karl-Friedrich, 23564 Lübeck (DE)
(74) Vertreter: Knoop, Philipp
(86) Internationale Anmeldenummer: PCT/EP2009/006077
(87) Internationale Veröffentlichungsnummer: WO 2010/025836

(56) Entgegenhaltungen:
- EP-A2- 1 790 851
- WO-A2-2008/055503
- DE-A1-102004 056 254
- US-A1- 2002 029 097

## Beschreibung

Die vorliegende Erfindung betrifft ein Verfahren zur Regelung eines Windparks, bestehend aus mehreren Windenergieanlagen, wobei der Windpark an ein elektrisches Versorgungsnetzwerk angeschlossen ist, in welches die von dem Windpark erzeugte elektrische Leistung eingespeist wird, und der Windpark über einen Steuereingang verfügt, mittels dem Sollregelgrößen des Windparks eingestellt werden können.

Außerdem betrifft die vorliegende Erfindung eine Steuerung für eine Windenergieanlage in einem Windpark zur Durchführung eines Verfahrens der eingangs genannten Art.

Windenergieanlagen werden häufig nicht singulär aufgestellt sondern in Form von mehreren nahe beieinander aufgestellten Windenergieanlagen als Windpark installiert. Unter Windpark versteht man in diesem Sinne also eine Anordnung von wenigstens zwei Windenergieanlagen. Häufig werden mehr als 50 Windanlagen in einem Verbund aufgestellt. Die Windparks der genannten Art speisen als Einheit an einem Netzübergabepunkt (PCC/Point Of Common Coupling) elektrische Leistung in das Stromverbundnetz ein. Seitens des Stromnetzbetreibers bestehen bezüglich der Einspeisung bestimmte Anforderungen, die als Sollregelgrößen des Windparks dienen. Zu den Anforderungen zählen insbesondere bestimmte Werte der Wirkleistung, der Blindleistung und der Netzspannung.

Um diese Vorgaben des Stromnetzbetreibers einzuhalten, bedarf es eines koordinierten Verhaltens der einzelnen Windenergieanlagen des Windparks. Im Stand der Technik werden zu diesem Zweck Windparkregelungen und Leitsysteme verwendet, die auf einem zentralen Windparkrechner basieren. Der zentrale Windparkregler kommuniziert gemäß Stand der Technik über ein Windparknetzwerk mit den Turbinen im Windpark und verfügt über eine Befehlsschnittstelle zum Stromnetzbetreiber. Gemäß Stand der Technik wird jede Windenergieanlage, die Teil des Windparks ist, von dem Windparkrechner zentral gesteuert. Zu diesem Zweck berechnet der zentrale Windparkrechner im Stand der Technik Sollwerte für jede individuelle Windenergieanlage unter Berücksichtigung des Windangebots, der Turbinenverfügbarkeit und der Sollwertvorgaben des Stromnetzbetreibers. Je nach Bedarf werden die einzelnen Windenergieanlagen des Windparks vom zentralen Parkrechner im Stand der Technik sequentiell gestartet und gestoppt.

Windparks mit einer zentralen Steuerungsarchitektur der genannten Art sind beispielsweise beschrieben in den Schriften EP 1 519 040 A1, EP 1 790 851 A2, US 2002/0029097, WO 00 2007 147 521 A1 oder WO 03/030329 A1.

Die derzeit übliche zentrale Steuerung hat jedoch den Nachteil, dass eine Erweiterung des Windparks durch Hinzufügen zusätzlicher Windenergieanlagen häufig mit aufwendigen Softwareanpassungen und dementsprechend zusätzlichem Projektierungsaufwand verbunden ist. Außerdem besteht potentiell die Gefahr, das der gesamte Windpark nicht nutzbar ist, wenn ein Fehler bei der zentralen Windparksteuerung vorliegt. Ferner ist eine Anpassung der zentralen Steuerung an verschiedene Topologien des Windparks in der Regel nur mit aufwendigen Anpassungen der Software möglich. Problematisch ist auch die Einbindung von Windenergieanlagen unterschiedlicher Hersteller in den Windpark. Nachteilig ist bei den bekannten zentralen Windparkregelungen außerdem, dass eine Messung der Parknetzdaten für die Regelung erforderlich ist.

Der vorliegenden Erfindung liegt daher die Aufgabe zu Grunde, ein Verfahren zur Regelung eines Windparks der eingangs genannten Art anzugeben, welches mit möglichst geringem Anpassungsaufwand an unterschiedlichste Windparktopologien angepasst werden kann, welches die Hinzufügung oder Entfernung von Windenergieanlagen zu dem Windpark mit minimalem Anpassungsaufwand ermöglicht, welches ohne eine Messung der Parknetzdaten am Netzübergabepunkt verwendbar ist und zudem die Einbindung von Windenergieanlagen verschiedener Hersteller in einen Windpark zulässt.

Eine weitere Aufgabe der Erfindung ist es, eine Windenergieanlage in einem Windpark mit einer Stenerung zur Durchführung des genannten Verfahrens anzugeben, um die genannten Nachteile zu überwinden.

Erfindungsgemäß wird die Verfahrensaufgabe mit einem Verfahren der eingangs genannten Art dadurch gelöst, dass jede Windenergieanlage dezentral geregelt wird, um mindestens eine Sollregelgröße des Windparks einzuhalten, wobei in Abhängigkeit der Sollregelgröße für den Windpark jeweils mindestens eine Regeleingangsgröße für die Windenergieanlage berechnet wird. Jede Windenergieanlage des Windparks verfügt somit über eine eigenständige Steuerung, welche als Eingangsgröße die Sollregelgröße für den Windpark verarbeitet, um so die Regeleingangsgrößen für diese Windenergieanlage zu bestimmen. Der Windpark verhält sich auf diese Weise ohne eine zentrale Steuerung gleichsam wie ein selbstregelndes System.

In Ausgestaltung der Erfindung ist die Sollregelgröße für den Windpark eine Wirkleistungsvorgabe und/oder eine Blindleistungsvorgabe und/oder eine Netzspannungsvorgabe und/oder ein Leistungsfaktor des Windparks (1)) und/oder eine Ausgangsfrequenz des Windparks und/oder ein Parameter zur Charakterisierung eines zeitlichen Verlaufs mindestens einer Sollregelgröße des Windparks ist. Mit dem zuletzt genannten Parameter kann mit Vorteil insbesondere ein zeitlicher Verlauf der Leistung, Spannung, Frequenz und/oder der Spannung als Parkausgangsgrößen vorgegeben werden.

Das erfindungsgemäße Verfahren wird weiter verbessert, wenn die Berechnung der Regeleingangsgröße zusätzlich in Abhängigkeit mindestens einer lokalen Messgröße, vorzugsweise einer lokalen Windgeschwindigkeit, durchgeführt wird. Auf diese Weise lässt sich mit dem erfindungsgemäßen Verfahren durch eine lokale Steuerung jeder einzelnen Windenergieanlage des Windparks unter Berücksichtigung sowohl der Sollregelgrößen des übergeordneten Windparks als auch lokaler Messdaten eine lokale Regeleingangsgröße für die Windenergieanlage bestimmen. Der Beitrag der einzelnen Windenergieanlage zur Leistung des gesamten Windparks wird somit lokal ermittelt.

Das erfindungsgemäße Verfahren wird weiter verbessert, indem zusätzlich mindestens eine Statusgröße und/oder lokale Messgröße, insbesondere Drehzahl, einer anderen Windenergieanlage des Windparks abgerufen und die Berechnung der Regeleingangsgröße zusätzlich in Abhängigkeit dieser Statusgröße durchgeführt wird. Durch diese Maßnahme liegt jeder einzelnen Windenergieanlagensteuerung die vollständige Information des gesamten Windparks vor. Eine Regelung zur Erreichung der vom Stromnetzbetreiber vorgegebenen Sollwerte für den Windpark gestaltet sich daher besonders günstig.

Mit der Kenntnis der Statusinformation des Windparks kann jede Windkraftanlage einen koordinierten Start und Stopp der Windenergieanlagen im Windpark auslösen.

Bevorzugt umfasst die Statusgröße der anderen Windenergieanlage deren Verfügbarkeit und/oder deren Leistung und/oder deren Drehzahl.

Eine vollständige Vernetzung der einstigen Windenergieanlagen und somit eine weitere Optimierung des erfindungsgemäßen Verfahrens sieht vor, dass zusätzlich mindestens eine Statusgröße jeder anderen Windenergieanlage des Windparks abgerufen und die Berechnung der Regeleingangsgröße zusätzlich in Abhängigkeit dieser Statusgrößen durchgeführt wird.

In Weiterbildung des erfindungsgemäßen Verfahrens kann jede Windenergieanlage dezentral auf eine Wirkleistung, vorzugsweise durch Verstellen der Rotorblattwinkel, eingeregelt werden. Die Wirkleistung jeder Windenergieanlage wird dabei erfindungsgemäß anhand der Sollregelgröße des Windparks und eventuell lokaler Messgrößen sowie Statusgrößen anderer Windenergieanlagen des Windparks berechnet.

In Ausgestaltung des erfindungsgemäßen Verfahrens wird jede Windenergieanlage dezentral auf einen Leistungsfaktor und/oder eine Blindleistung und/oder eine Spannung eingeregelt. Wiederum werden die Regelsollwerte für die Windenergieanlage in Abhängigkeit von den Sollregelgrößen des Windparks und eventuell von lokalen Messgrößen sowie Statusgrößen anderer Windenergieanlagen des Windparks errechnet.

Besonders günstig ist es erfindungsgemäß, wenn die mindestens eine Statusgröße und/oder lokale Messgröße einer/der anderen Windenergieanlage(n) des Windparks periodisch dezentral abgerufen wird. Der periodische Abruf erfolgt also nicht, wie im Stand der Technik, über ein zentrales Leitsystem. Vielmehr fordert jede Windenergieanlage dezentral die entsprechenden Daten an. Auf diese Weise ist sichergestellt, dass die Steuerung der einzelnen Windenergieanlage auf aktuellen Daten über die anderen Windenergieanlagen des Windparks basieren kann.

Bevorzugt kann in weiterer vorteilhafter Ausgestaltung jede Windenergieanlage Änderungen der eigenen Daten an die anderen Windenergieanlagen des Windparks versenden. Dies kann entweder im Form eines *Multicast* parallel an alle anderen Windenergieanlagen des Windparks oder in Form eines *Unicast* sequentiell an jede einzelen Windenergieanlage erfolgen. Somit kommunizieren alle Windenergieanlagen des Parks zyklisch untereinander über ein Parknetzwerk. Geeignete Datenübertragungsmechanismen gewährleisten den Abgleich der Parksollwerte, der Parkparameter sowie der Statusinformationen der Windenergieanlagen im Park untereinander. Durch diese Maßnahme liegt jeder einzelnen Windenergieanlagensteuerung die vollständige Information des gesamten Windparks vor.Der Abruf sollte in möglichen kurzen Intervallen erfolgen. Idealerweise erfolgt ein kontinuierlicher Datenabruf. Ein Parknetzwerk zur Realisierung dieser Funktion sollte daher eine möglichst hohe Bandbreite aufweisen. Zum Beispiel kann je nach Art der Anlage eine Taktrate von 100 ms geeignet sein.

In vorteilhafter Ausgestaltung des erfindungsgemäßen Verfahrens wird in Abhängigkeit von der berechneten Regeleingangsgröße für die Windenergieanlage dezentral eine Meldung zum Variieren mindestens eines Betriebsparameters, insbesondere Rotorblattanstellwinkel, mindestens einer anderen Windenergieanlage des Windparks an die andere(n) Windenergieanlage(n) gesendet. Dies kann beispielsweise vorteilhaft sein, wenn durch eine Windenergieanlage lokal eine Windböe detektiert wird, um bei einer anderen Windenergieanlage des Parks zur Vermeidung von Schäden bereits vor Eintreffen dieser Böe den Rotorblattwinkel zu varrieren. Auf diese Weise wird erfindungsgemäß eine Vorsteuerung für die Blattwinkelverstellung im Sinne einer Beobachterfunktion. Bei herkömmlichen, auf einem zentralen Parkserver basierenden Regelungen kann diese Funktion nur mittels des zentralen Parkservers realisiert. Dadurch, dass erfindungsgemäß diese Funktion auf der Ebene der Windenergieanlage erfolgt, ist ein Zentralrechner mit Vorteil entbehrlich. Jede einzelne Windenergieanlage des Windparks ist erfindungsgemäß in der Lage, eine Abschaltung einzelner oder aller Windenergieanlagen des Windparks auszulösen.

Darüberhinaus kann nach der Erfindung jede Windenergieanlage gleichermaßen wie die Datenschniftstell am PCC einen ParkStart oder einen ParkStopp-Befehl erhalten. Diese Befehle werden über das Windparknetzwerk und entsprechende Datenabgleichmechanismen verteilt und führen dann zur selbständig koordinierten Parkabschaltung. Jedoch gilt, dass jede Anlage anhand der ihr vorliegenden Informationen selbständig agiert. Im Falle einer koordinierten Parkabschaltung wartet beispielsweise jede Turbine auf die erfolgreiche Abschaltung der Vorgängerturbine, um dann ihrerseits den Abschaltvorgang einzuleiten.

Es kann in weiterer vorteilhafter Ausgestaltung der Erfindung mindestens ein Park-Istwert gemessen werden, wobei die Berechnung der Regeleingangsgröße zusätzlich in Abhängigkeit des gemessenen Parkistwerts durchgeführt wird. Zweckmäßigerweise wird der Park-Istwert durch jede Turbine am Netzübergabepunkt (PCC) eingelesen, um damit den lokal ermittelten Regelsollwert der jeweiligen Windenergieanlage nachzujustieren.

Zur weiteren Verbesserung der Regelqualität wird im Rahmen der Erfindung die Berechnung der Regeleingangsgröße zusätzlich in Abhängigkeit mindestens einer Nachbarturbineneigenschaft, insbesondere einer Leitungslänge, durchgeführt. Beispielsweise lässt sich der Anteil zur Blindleistungsstatik und zur Kompensation der Verluste individuell berechnen und zur Vorsteuerung der jeweiligen lokalen Windenergieanlagenregelung nutzen.

Sollregelgrößen des Windparks können in bevorzugter Ausgestaltung der Erfindung mittels einer dezentralen Steuer- und Datenaufzeichnungseinheit (SCADA-Einheit) und/oder mittels eines Datennetzwerks auf die Windenergieanlagen übertragen werden. Auf die gleiche Weise können Regelmodi sowie Parkstart und Parkstopbefehle übertragen werden.

Alternativ zur Übertragung über das SCADA-System können die genannten Daten von jeder Windenergieanlage über ein analoges und/oder digitales Interface an der Schnittstelle zum Stromnetzbetreiber eingelesen werden.

Die weiter oben genannte Vorrichtungsaufgabe wird erfindungsgemäß bei einer Windenergieanlage in einem Windpark mit einer Stenerung zur Durchführung des oben genannten Verfahrens gelöst, indem Mittel zur direkten Kommunikation mit anderen Windenergieanlagen innerhalb des Windparks und/oder Mittel zur Kommunikation mit dem Steuereingang des Windparks, ein Datenbereich zum Abspeichern mindestens einer Sollregelgröße des Windparks und/oder mindestens einer Statusgröße mindestens einer anderen Windenergieanlage sowie Mittel zur Berechnung einer Regeleingangsgröße für die Windenergieanlage in Abhängigkeit von der Sollregelgröße für den Windpark und von der Statusgröße vorgesehen sind. Unter einer direkten Kommunikation ist hier zu verstehen, dass die Kommunikation ohne Einschaltung eines zentralen Rechners direkt von einer Windenergieanlage zur anderen erfolgt.

Im Rahmen der Erfindung umfassen die Mittel zur Kommunikation mit anderen Windenergieanlagen vorzugsweise ein Datennetzwerk, insbesondere Internet, und/oder einen Router.

Um veränderliche Parameter des Windparks, die der Stromnetzbetreiber vorgibt, wie zum Beispiel Park-Sollwerte und Park-Regelmodi sowie Parkstart- und Stopbefehle an die Steuerungen der einzelnen Windenergieanlagen zu kommunizieren, umfassen die Mittel zur Kommunikation mit dem Steuereingang des Windparks eine Datenschnittstelle. Diese Datenschnittstelle kann in das Windparknetzwerk eingebunden Teil des Datenabgleichmechanismus der Windenergieanlagen untereinander sein.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit den gleichen Bezugszeichen versehen.

Die Figuren der Zeichnung zeigen im Einzelnen:
- Figur 1:: den schematischen Aufbau eines beispielhaften Windparks, der mit dem erfindungsgemäßen Verfahren regelbar ist, sowie dessen Anbindung und Schnittstelle an ein Stromnetz;
- Figur 2:: eine schematische Darstellung eines Parknetzwerks für die Kommunikation unter den Windenergieanlagen des Windparks gemäß Figur 1 bei Anwendung des erfindungsgemäßen Verfahrens.

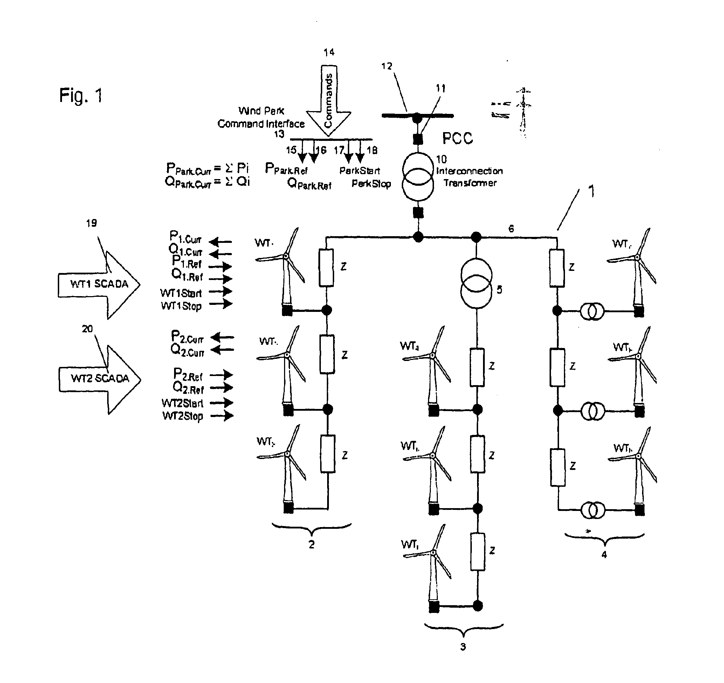

Figur 1 zeigt einen Windpark 1, der aus mehreren zur Bildung des Windparks 1 zusammengeschalteten Windenergieanlagen WT1,...,WT9 besteht. Die Topologie des beispielhaft dargestellten Windparks 1 besteht aus drei Strängen 2, 3 , 4. Der Strang 2 fasst die Windenergieanlagen WT1, WT2 sowie WT3 elektrisch zusammen. Die Zusammenschaltung ist durch die Scheinwiederstände Z veranschaulicht. Der Strang 2 ist direkt an die Parkübergabeleitung 6 angeschlossen.

Der Strang 3 des Windparks 1 besteht aus den Windenergieanlagen WT4, WT5 sowie WT6, die elektrisch zusammengeschaltet sind. Die Zusammenschaltung der Windenergieanlagen WT4, WT5, WT6, ist wiederum durch den Scheinwiderstand Z angedeutet. Der Strang 3 ist mit dem Strang 2 über einen Zwischentransformator 5 an eine Parkübergabeleitung 6 angeschlossen.

Der Strang 4 fasst die Windenergieanlagen WT7, WT8, WT9 zusammen. Die Zusammenschaltung ist im Falle des Strangs 4 mit zwischengeschalteten Transformatoren 7, 8, 9 realisiert, wobei außerdem wiederum die Scheinwiderstände Z schematisch gezeigt sind. Der Strang 4 ist direkt an die Parkübergabeleitung 6 angeschlossen. Die Parkübergabeleitung 6 ist über einen Übergabetransformator 10 an einen Netzübergabepunkt (PCC = Point Of Common Coupling) 11 angeschlossen.

Der PCC 11 ist mit dem externen Stromnetz 12 elektrisch verbunden. Der beispielhaft beschriebene Windpark 1 besteht somit aus den elektrisch auf unterschiedliche Weise zusammengeschalteten Strängen 2, 3 ,4.

Schematisch ist in der Figur 1 weiter eine Steuerschnittstelle 13 zwischen einem Stromnetzbetreiber und dem Windpark 1 angedeutet. Über die Steuerschnittstelle 13 werden Steuerbefehle 14 an den Windpark 1 übergeben. Die Steuerbefehle 14 werden auf Seiten des Windparks 1 interpretiert als ein Wirkleistungssollwert (P_{Park},_{Ref}) 15 sowie als ein Blindleistungssollwert (Q_{Park,Ref}) 16 interpretiert. Die Steuerbefehle 14, die vom Betreiber des Stromnetzes 12 an den Windpark 1 übergeben werden, beinhalten ferner einen Parkstartbefehl 17 zum koordinierten Starten des Windparks 1 sowie einen Parkstopbefehl 18 zum koordinierten Abschalten des gesamten Windparks 1.

Am Netzübergabepunkt 11 ergibt sich der Istwert der Wirkleistung des Windparks 1, P_{Park,Curr} rechnerisch als Summe der Teilwirkleistungen Pi jeder Windenergielage WT1,... ,WT9. Dies ist in der Figur schematisch durch die Summenformel P_{Park,Curr} = Σ Pi angedeutet.

Gleichermaßen ergibt sich am Netzübergabepunkt 11 der Istwert der Parkblindleistung, P_{Park,Curr} als Summe der Teilblindleistungen jeder Windenergieanlage WT1...WT9. Dies ist in der Figur ebenfalls durch die Summenformel Q_{Park,Curr} = Σ Qi angedeutet.

Die Kommunikation mit den Windenergieanlagen WT1... WT9 ist in der Figur beispielhaft für die Windenergieanlage WT2 veranschaulicht. Danach werden veränderbare Parkparameter des Netzbetreibers, wie insbesondere Parksollwerte und Parkregelmodi über eine dezentrale Steuer- und Datenaufzeichnungseinheit (SCADA-Einheit) 19, 20 der jeweiligen Windenergieanlage WT1 bzw. WT 2 auf diese übertragen. Daten, die von einer lokalen Steuerung jeder Windenergieanlage WT1...WT9 ausgegeben werden, umfassen, wie in Figur 1 skizziert, insbesondere einen Istwert einer Teilwirkleistung P_{1Curr} der Windenergieanlage 1 sowie einen Istwert der Teilblindleistung Q_{1Curr} der Windenergieanlage WT1. Ferner, wie durch die entgegengesetzte Pfeilrichtung angedeutet, erzeugt die lokale Steuerung jeder Windenergieanlage WT1... WT 9 ein Signal für den Sollwert der Teilwirkleistung P_{1, Ref} der jeweiligen Windenergieanlage WT1, einen Sollwert der Blindleistung Q_{1,Ref} sowie ggf. einen Startbefehl WT1 Start und einen Stopbefehl WT1 Stop zum Starten bzw. Abschalten der jeweiligen Windenergieanlage WT1 ... WT9. Die Verhältnisse sind analog für WT2 mit geänderten Indizes veranschaulicht.

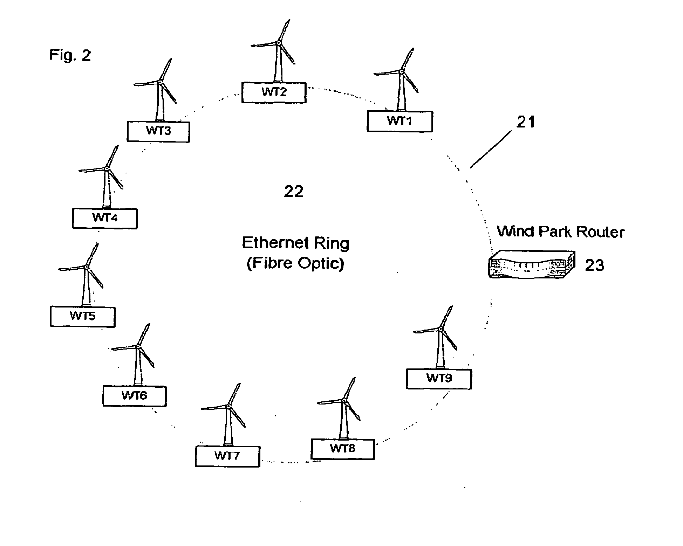

In Figur 2 ist ein Windparknetzwerk 21 skizziert, welches die Windenergieanlagen WT1... WT9 des Windparks 1 gemäß Figur 1 miteinander kommunizieren lässt. Das Windparknetzwerk 21 ist als Ethernetring 22 ausgestaltet, der einen Netzwerkrouter 23 umfasst. Der Ethernetring 22 kann zum Beispiel aus Glasfaser, Kabel, Kupferkabel oder auch drahtlos als Drahtlosnetzwerk (WLAN) ausgestaltet sein.

Der Ethernetring 22 stellt in Verbindung mit dem Netzwerkrouter 22 eine Datenkommunikation zwischen jeder Windenergieanlage WT1... WT9 des Windparks 1 mit allen anderen Windenergieanlagen WT1...WT9 zur Verfügung. Die Kreisanordnung der Figur 2 ist dabei nur schematische zu verstehen und keinesfalls dahingehend misszuverstehen, es sei lediglich eine sequenzielle Kommunikation zwischen benachbarten Windenergieanlagen möglich.

Das erfindungsgemäße Verfahren wird bei einem Windpark 1 mit den Windenergieanlagen WT1 ... WT9, die über das Windparknetzwerk 21 miteinander vernetzt sind, wie folgt durchgeführt.

Der Netzbetreiber sendet Steuerbefehle 14 an den Windpark 1. Die Steuerbefehle 14 enthalten Sollwerte für die Wirkleistung 15 und die Blindleistung 16, die der Windpark 1 über den Übergabetransformator 10 am Netzübergabepunkt 11 in das Stromnetz 12 einspeisen soll. Ferner enthält der Steuerbefehl 14 den Parkstartbefehl 17 zum Hochfahren des Windparks 1. Der Wirkleistungssollwert 15, der Blindleistungssollwert 16 sowie der Parkstartbefehl 17 werden anschließend über die SCADA-Einheiten 19, 20 usw., die jeder Windenergieanlage WT, ...,WT9 zugeordnet sind, an die lokalen Steuerungen jeder Windenergieanlage WT1,... ,WT9 übergeben. Jede lokale Steuerung jeder Windenergieanlage WT1 ... WT9 ermittelt anschließend eine lokale Messgröße, wie zum Beispiel die Windgeschwindigkeit am Ort der jeweiligen Windenergieanlage WT1 ... WT9. Ferner bezieht die lokale Steuerung jeder Windenergieanlage WT1 ... WT9 über das Windparknetzwerk 21 mittels des Ethernetrings 22 Daten über den Betriebsstatus einer, mehrerer oder aller anderer Windenergieanlagen des Windparks 1. Die Statusdaten der anderen Windenergieanlagen betreffen insbesondere die aktuelle Wirkleistung sowie die aktuelle Wirkleistung und Blindleistung der anderen Windenergieanlage (n).

Anschließend wird durch die lokale Steuerung jeder Windenergieanlage anhand der dem externen Steuerbefehl 14 entnommenen Sollwerte für den Windpark, anhand der lokalen Messwerte, wie zum Beispiel der Windgeschwindigkeit, sowie anhand der Statusdaten der anderen Windenergieanlagen ein lokaler Sollwert errechnet. Die lokalen Sollwerte dienen zur Steuerung der jeweiligen Windenergieanlage.

Innerhalb des Windparknetzwerks 21 wird jeder Windenergieanlage eine eindeutige logische Adresse zugewiesen, über die sie von den anderen Windenergieanlagen angesprochen werden kann. Alle Windenergieanlagen kommunizieren nun über das Windparknetzwerk 21 zyklisch untereinander. Die zyklische Datenübertragung zwischen den Windenergieanlagen stellt den Abgleich der Parameter und der Statusinformation der Windenergieanlagen im Windpark 1 sicher.

Zyklisch berechnet nun jede Windenergieanlagensteuerung unter Berücksichtigung der Verfügbarkeit der anderen Windenergieanlagen WT1 ... WT9 im Windpark 1 sowie weitere Informationen, wie zum Beispiel lokaler Windgeschwindigkeit, und Parksollregelgrößen den lokal wirkenden Sollwert, um die Vorgaben des Netzbetreibers für den Windpark 1 am Netzübergabepunkt 11 zu erfüllen.

Der resultierende Parkistwert am Netzübergabepunkt 11 lässt sich durch Überlagerung der Wirk- und Blindleistungen jeder einzelnen Windenergieanlage WT1 ... WT9 des Windparks 1 berechnen. Daher ist mit Vorteil erfindungsgemäß eine Messung dieser Werte am Netzübergabepunkt 11 nicht zwingend erforderlich.

Es sind entsprechend auch Parktopologien mit Windenergieanlagen unterschiedlicher Hersteller innerhalb des Windparks realisierbar. Voraussetzung ist lediglich, dass jede Windenergieanlage über eine zusätzliche Datenschnittstelle zur Übergabe der Status- und Befehlinformationen verfügt. Jede Windenergieanlage kann dann den jeweiligen Status über das Windparknetzwerk 21 an die anderen Windenergieanlagen übermitteln.

Innerhalb des Windparknetzwerks 21 ist jede Windenergieanlage hierarchisch gleichgestellt. Entsprechend kann jede Windenergieanlage WT1,...,WT9 in Abhängigkeit der errechneten lokalen Sollwerte auch einen Start oder Stopbefehl an andere Windenergieanlagen des Windparks 1 über das Windparknetzwerk 21 senden, um einzelne Windenergieanlagen des Windpark 1 abzuschalten oder hochzufahren.

Das erfindungsgemäße Verfahren erfordert keinen zentral gesteuerten Parkrechner als Leitsystem für den Windpark 1. Die Regelung auf die Parksollwerte basiert erfindungsgemäß allein auf den lokal gemessenen Istwerten jeder Windenergieanlage.

Die dezentrale Windparkregelung gemäß der Erfindung ermöglicht es, dass das Parkregelverhalten prinzipiell unabhängig von der Anzahl der Windenergieanlagen des Windparks 1 ist. Denn jede einzelne Windenergieanlage führt alle Funktionen der Parkregelung aus.

Durch diesen dezentralen Ansatz wird die Parkregelung unabhängig gegenüber Änderungen der Parktopologie und ist auf Grund der schnellen lokalen Regelung robust gegenüber transienten Vorgängen wie Abschaltung von einzelnen Windenergieanlagen und Netzfehlern innerhalb und außerhalb.

Die Unabhängigkeit von der Parktopologie ist in dem Ausführungsbeispiel gemäß den Figuren 1 und 2 insbesondere dadurch veranschaulicht, dass jeder der Stränge 2,3, 4 des Windparks 1 elektrisch unterschiedlich zusammengeschaltet ist, wobei dieser Unterschied in der Architektur des Windparknetzwerks 21 keine Rolle spielt.

### BEZUGSZEICHENLISTE

| | |
|---|---|
| 1 | Windpark |
| WT1 | Windenergieanlage |
| ... | ... |
| WT9 | Windenergieanlage |
| 2 | Strang |
| 3 | Strang |
| 4 | Strang |
| Z | Scheinwiderstand |
| 5 | Zwischentransformator |
| 6 | Parkübergabeleitung |
| 7 | Transformator |
| 8 | Transformator |
| 9 | Transformator |
| 10 | Übergabetransformator |
| 11 | Netzübergabepunkt |
| 12 | Stromnetz |
| 13 | Steuerschnittstelle |
| 14 | Steuerbefehle |
| 15 | Wirkleistungssollwert |
| 16 | Blindleistungssollwert |
| 17 | Parkstartbefehl |
| 18 | Parkstoppbefehl |
| 19 | SCADA-Einheit |
| 20 | SCADA-Einheit |
| 21 | Windparknetzwerk |
| 22 | Ethernetring |
| 23 | Netzwerkrouter |

## Patentansprüche

1. Verfahren zur Regelung eines Windparks (1), bestehend aus mehreren Windenergieanlagen (WT1, ..., WT9), wobei der Windpark (1) an ein elektrisches Versorgungsnetzwerk (12) angeschlossen ist, in welches die von dem Windpark (1) erzeugte elektrische Leistung eingespeist wird, und der Windpark (1) über einen Steuereingang (13) verfügt, mittels dem Sollregelgrößen (15, 16) des Windparks (1) eingestellt werden können, **dadurch gekennzeichnet, dass** jede Windenergieanlage (WT1, ..., WT9) dezentral geregelt wird, um mindestens eine Sollregelgröße (15, 16) des Windparks (1) einzuhalten, wobei in Abhängigkeit der Sollregelgröße (15, 16) für den Windpark (1) windenergieanlagenseitig jeweils mindestens eine Regeleingangsgröße (P1ref, Q1ref) für die Windenergieanlage (WT1, ..., WT9) berechnet wird.

2. Verfahren nach Anspruch 1, **dadurch gekennzeichnet, dass** die Sollregelgröße (15, 16) für den Windpark (1) eine Wirkleistungsvorgabe und/oder eine Blindleistungsvorgabe und/oder eine Netzspannungsvorgabe und/oder ein Leistungsfaktor des Windparks (1) und/oder eine Ausgangsfrequenz des Windparks und/oder ein Parameter zur Charakterisierung eines zeitlichen Verlaufs mindestens einer Sollregelgröße des Windparks ist.

3. Verfahren nach Anspruch 1 oder 2, **dadurch gekennzeichnet, dass** die Berechnung der Regeleingangsgröße (P_{1Ref}, _{Q1Ref}) zusätzlich in Abhängigkeit mindestens einer lokalen Messgröße, vorzugsweise einer lokalen Windgeschwindigkeit und/oder einer Drehzahl, durchgeführt wird.

4. Verfahren nach Anspruch 1 oder 2, **dadurch gekennzeichnet, dass** zusätzlich mindestens eine Statusgröße und/oder lokale Messgröße, insbesondere Drehzahl, einer anderen Windenergieanlage (WT1, ..., WT9) des Windparks (1) abgerufen und die Berechnung der Regeleingangsgröße zusätzlich in Abhängigkeit dieser Statusgröße durchgeführt wird.

5. Verfahren nach einem der vorhergehenden Ansprüche, **dadurch gekennzeichnet, dass** die Statusgröße der anderen Windenergieanlage (WT1, ..., WT9) deren Verfügbarkeit und/oder deren Leistung umfasst.

6. Verfahren nach einem der vorhergehenden Ansprüche, **dadurch gekennzeichnet, dass** zusätzlich mindestens eine Statusgröße jeder anderen Windenergieanlage (WT1,.... WT9) des Windparks (1) abgerufen und die Berechnung der Regeleingangsgröße zusätzlich in Abhängigkeit dieser Statusgrößen durchgeführt wird.

7. Verfahren nach einem der vorhergehenden Ansprüche, **dadurch gekennzeichnet, dass** jede Windenergieanlage (WT1, ..., WT9) dezentral auf eine Wirkleistung, vorzugsweise durch Verstellen der Rotorblattwinkel, eingeregelt wird.

8. Verfahren nach einem der vorhergehenden Ansprüche, **dadurch gekennzeichnet, dass** jede Windenergieanlage (WT1, ..., WT9) dezentral auf einen Leistungsfaktor und/oder eine Blindleistung und/oder eine Spannung eingeregelt wird.

9. Verfahren nach einem der vorhergehenden Ansprüche, **dadurch gekennzeichnet, dass** die mindestens eine Statusgröße und/oder lokale Messgröße einer/der anderen Windenergieanlage(n) (WT1, ..., WT9) des Windparks (1) periodisch dezentral abgerufen wird.

10. Verfahren nach einem der vorhergehenden Ansprüche, **dadurch gekennzeichnet, dass** in Abhängigkeit von der berechneten Regeleingangsgröße für die Windenergieanlage (1) dezentral eine Meldung zum Variieren mindestens eines Betriebsparameters, insbesondere Rotorblattanstellwinkel, mindestens einer anderen Windenergieanlage (WT1, ..., WT9) des Windparks (1) an die andere(n) Windenergieanlage(n) (WT1, ..., WT9) gesendet wird.

11. Verfahren nach einem der vorhergehenden Ansprüche, **dadurch gekennzeichnet, dass** mindestens ein Park-Istwert gemessen wird, wobei die Berechnung der Regeleingangsgröße zusätzlich in Abhängigkeit des gemessenen Park-Istwerts durchgeführt wird.

12. Verfahren nach einem der vorhergehenden Ansprüche, **dadurch gekennzeichnet, dass** die Berechnung der Regeleingangsgröße zusätzlich in Abhängigkeit mindestens einer Nachbarturbineneigenschaft, insbesondere einer Leitungslänge, durchgeführt wird.

13. Verfahren nach einem der vorhergehenden Ansprüche, **dadurch gekennzeichnet, dass** Sollregelgrößen des Windparks (1) mittels einer dezentralen Steuer- und Datenaufzeichnungseinheit (SCADA-Einheit) (19, 20) und/oder mittels eines Datennetzwerks (21) auf die Windenergieanlagen (WT1, ..., WT9) übertragen werden.

14. Windenergieanlage (WT1, ..., WT9) in einem Windpark (1) mit einer Steuerung zur Durchführung des Verfahrens nach einem der Ansprüche 1 bis 13, **dadurch gekennzeichnet, dass** bei der Steuerung Mittel zur Berechnung einer Regeleingangsgröße für die Windenergieanlage in Abhängigkeit von der Sollregelgröße für den Windpark (1) vorgesehen sind.

15. Windenergieanlage nach Anspruch 14, **dadurch gekennzeichnet, dass** bei der Steuerung Mittel (21, 22, 23) zur direkten Kommunikation mit anderen Windenergieanlagen (WT1, ..., WT9) innerhalb des Windparks (1) und/oder Mittel zur Kommunikation mit dem Steuereingang (13) des Windparks (1), ein Datenbereich zum Abspeichern mindestens einer Sollregelgröße des Windparks (1) und/oder mindestens einer Statusgröße mindestens einer anderen Windenergieanlage (WT1, ..., WT9) und/oder das Mittel zur Berechnung einer Regeleingangsgröße für die Windenergieanlage in Abhängigkeit von der Statusgröße vorgesehen sind.

16. Windenergieanlage nach Anspruch 14 oder 15, **dadurch gekennzeichnet, dass** die Mittel zur Kommunikation mit anderen Windenergieanlagen ein Datennetzwerk (21), insbesondere Ethernet (22), und/oder einen Router (23) umfassen.

17. Windenergieanlage nach einem der Ansprüche 14 bis 16, **dadurch gekennzeichnet, dass** die Mittel zur Kommunikation mit dem Steuereingang des Windparks eine Datenschnittstelle umfassen.

## Claims

1. Method for controlling a wind park (1) consisting of a plurality of wind turbines (WT1,. .. , WT9), the wind park (1) being connected to an electric utility grid (12) into which the electric power generated by the wind park (1) is fed, and the wind park (1) including a control input (13) by means of which target controlled variables (15, 16) of the wind park (1) can be set, **characterised in that** each wind turbine (WT1, ... , WT9) is controlled in a decentralised manner in order to maintain at least one target controlled variable (15, 16) of the wind park (1), at least one controlled input variable (P1ref, Q1ref) for the wind turbine (WT1, ... , WT9) being calculated on the wind turbine side as a function of the target controlled variable (15, 16) for the wind park (1).

2. Method according to claim 1, **characterised in that** the target controlled variable (15, 16) for the wind park (1) is an active power specification and/or a reactive power specification and/or a grid voltage specification and/or a power factor of the wind park (1) and/or an output frequency of the wind park and/or a parameter for characterising a time course of at least one target controlled variable of the wind park.

3. Method according to either claim 1 or claim 2, **characterised in that** the controlled input variable (P_{1Ref}, Q_{1Ref}) is additionally calculated as a function of at least one local measured variable, preferably of a local wind speed and/or a rotational speed.

4. Method according to either claim 1 or claim 2, **characterised in that**, in addition, at least one status variable and/or local measured variable, in particular rotational speed, of another wind turbine (WT1, ... , WT9) of the wind park (1) is retrieved and the controlled input variable is additionally calculated as a function of this status variable.

5. Method according to any of the preceding claims, **characterised in that** the status variable of the other wind turbine (WT1, ... , WT9) includes its availability and/or its power.

6. Method according to any of the preceding claims, **characterised in that**, in addition, at least one status variable of each of the other wind turbines (WT1, ... , WT9) of the wind park (1) is retrieved and the controlled input variable is additionally calculated as a function of this status variable.

7. Method according to any of the preceding claims, **characterised in that** each wind turbine (WT1, ... , WT9) is adjusted to an active power in a decentralised manner, preferably by setting the rotor blade angle.

8. Method according to any of the preceding claims, **characterised in that** each wind turbine (WT1, ... , WT9) is adjusted to a power factor and/or a reactive power and/or a voltage in a decentralised manner.

9. Method according to any of the preceding claims, **characterised in that** the at least one status variable and/or local measured variable of one/of the other wind turbine(s) (WT1, .. , WT9) of the wind park (1) is periodically retrieved in a decentralised manner.

10. Method according to any of the preceding claims, **characterised in that**, as a function of the calculated controlled input variable for the wind turbine (1), a notification for varying at least one operating parameter, in particular rotor blade pitch angle, of at least one other wind turbine (WT1, ... , WT9) of the wind park (1) is sent to the other wind turbine(s) (WT1, ... , WT9) in a decentralised manner.

11. Method according to any of the preceding claims, **characterised in that** at least one park actual value is measured, the controlled input variable being additionally calculated as a function of the measured park actual value.

12. Method according to any of the preceding claims, **characterised in that** the controlled input variable is additionally calculated as a function of at least one property of a neighbouring turbine, in particular a line length.

13. Method according to any of the preceding claims, **characterised in that** target controlled variables of the wind park (1) are transmitted to the wind turbines (WT1, ... , WT9) by means of a decentralised control and data recording unit (SCADA unit) (19, 20) and/or by means of a data network (21).

14. Wind turbine (WT1, ... , WT9) in a wind park (1) comprising a control system for performing the method according to any of claims 1 to 13, **characterised in that** means for calculating a controlled input variable for the wind turbine as a function of the target controlled variable for the wind park (1) are provided in the control system.

15. Wind turbine according to claim 14, **characterised in that** means (21, 22, 23) are provided in the control system for directly communicating with other wind turbines (WT1, ... , WT9) within the wind park (1) and/or means for communicating with the control input (13) of the wind park (1), a data area for storing at least one target controlled variable of the wind park (1) and/or at least one status variable of at least one other wind turbine (WT1, ... , WT9) and/or means for calculating a controlled input variable for the wind turbine as a function of the status variable.

16. Wind turbine according to either claim 14 or claim 15, **characterised in that** the means for communicating with other wind turbines comprise a data network (21), in particular Ethernet (22), and/or a router (23).

17. Wind turbine according to any of claims 14 to 16, **characterised in that** the means for communicating with the control input of the wind park comprise a data interface.

## Revendications

1. Procédé de régulation d'un parc éolien (1) se composant de plusieurs éoliennes (WT1, ..., WT9), le parc éolien (1) étant raccordé à un réseau d'alimentation électrique (12), dans lequel la puissance électrique générée par le parc éolien (1) est injectée, et le parc éolien (1) disposant d'une entrée de commande (13), à l'aide de laquelle des grandeurs de régulation de consigne (15, 16) du parc éolien (1) peuvent être réglées, **caractérisé en ce que** chaque éolienne (WT1, ..., WT9) est régulée de manière décentralisée afin de respecter au moins une grandeur de régulation de consigne (15, 16) du parc éolien (1), respectivement au moins une grandeur d'entrée de régulation (P1ref, Q1ref) pour l'éolienne (WT1, ..., WT9) étant calculée côté éolienne en fonction de la grandeur de régulation de consigne (15, 16) pour le parc éolien (1).

2. Procédé selon la revendication 1, **caractérisé en ce que** la grandeur de régulation de consigne (15, 16) pour le parc éolien (1) est une prescription de puissance active et/ou une prescription de puissance apparente et/ou une prescription de tension de réseau et/ou un facteur de puissance du parc éolien (1) et/ou une fréquence de départ du parc éolien et/ou un paramètre pour la caractérisation d'un déroulement temporel d'au moins une grandeur de régulation de consigne du parc éolien.

3. Procédé selon la revendication 1 ou 2, **caractérisé en ce que** le calcul de la grandeur d'entrée de régulation (P_{1Ref}, _{Q1Ref}) est en outre réalisé en fonction d'au moins une grandeur de mesure locale, de préférence d'une vitesse du vent locale et/ou d'une vitesse de rotation.

4. Procédé selon la revendication 1 ou 2, **caractérisé en ce qu'**en outre, au moins une grandeur d'état et/ou une grandeur de mesure locale, en particulier la vitesse de rotation d'une autre éolienne (WT1, ..., WT9) du parc éolien (1) est appelée et le calcul de la grandeur d'entrée de régulation est en outre réalisé en fonction de cette grandeur d'état.

5. Procédé selon l'une quelconque des revendications précédentes, **caractérisé en ce que** la grandeur d'état de l'autre éolienne (WT1, ..., WT9) comporte sa disponibilité et/ou sa puissance.

6. Procédé selon l'une quelconque des revendications précédentes, **caractérisé en ce qu'**en outre, au moins une grandeur d'état de chaque autre éolienne (WT1, ..., WT9) du parc éolien (1) est appelée et le calcul de la grandeur d'entrée de régulation est en outre réalisé en fonction de ces grandeurs d'état.

7. Procédé selon l'une quelconque des revendications précédentes, **caractérisé en ce que** chaque éolienne (WT1, ..., WT9) est régulée de manière décentralisée sur une puissance active de préférence par réglage des angles de pale de rotor.

8. Procédé selon l'une quelconque des revendications précédentes, **caractérisé en ce que** chaque éolienne (WT1, ..., WT9) est régulée de manière décentralisée sur un facteur de puissance et/ou une puissance apparente et/ou une tension.

9. Procédé selon l'une quelconque des revendications précédentes, **caractérisé en ce que** l'au moins une grandeur d'état et/ou grandeur de mesure locale d'une/des autre(s) éolienne(s) (WT1, ..., WT9) du parc éolien (1) est périodiquement appelée de manière décentralisée.

10. Procédé selon l'une quelconque des revendications précédentes, **caractérisé en ce qu'**en fonction de la grandeur d'entrée de régulation calculée pour l'éolienne (1), un message est envoyé de manière décentralisée pour varier au moins un paramètre de fonctionnement, en particulier l'angle d'incidence de pale de rotor, au moins d'une autre éolienne (WT1, ..., WT9) du parc éolien (1) à l'autre éolienne/aux autres éoliennes (WT1, ..., WT9).

11. Procédé selon l'une quelconque des revendications précédentes, **caractérisé en ce qu'**au moins une valeur réelle de parc est mesurée, le calcul de la grandeur d'entrée de régulation est en outre réalisé en fonction de la valeur réelle de parc mesurée.

12. Procédé selon l'une quelconque des revendications précédentes, **caractérisé en ce que** le calcul de la grandeur d'entrée de régulation est en outre réalisé en fonction d'au moins une propriété de turbine contigüe, en particulier d'une longueur de conduite.

13. Procédé selon l'une quelconque des revendications précédentes, caractérisées esen ce que des grandeurs de régulation de consigne du parc éolien (1) sont transmises à l'aide d'une unité de commande et d'enregistrement des données (unité SCADA) décentralisée (19,20) et/ou à l'aide d'un réseau de données (21) aux éoliennes (WT1, ..., WT9).

14. Eolienne (WT1, ..., WT9) dans un parc éolien (1) avec une commande pour la réalisation du procédé selon l'une quelconque des revendications 1 à 13, **caractérisé en ce que** des moyens de calcul d'une grandeur d'entrée de régulation pour l'éolienne en fonction de la grandeur de régulation de consigne pour le parc éolien (1) sont prévus pour la commande.

15. Eolienne selon la revendication 14, **caractérisé en ce que** pour la commande, il est prévu des moyens (21, 22, 23) pour la communication directe avec d'autres éoliennes (WT1, ..., WT9) dans le parc éolien (1) et/ou des moyens pour la communication avec l'entrée de commande (13) du parc éolien (1), une zone de données pour l'enregistrement d'au moins une grandeur de régulation de consigne du parc éolien (1) et/ou d'au moins une grandeur d'état d'au moins une autre éolienne (WT1, ..., WT9) et/ou le moyen pour le calcul d'une grandeur d'entrée de régulation pour l'éolienne en fonction de la grandeur d'état.

16. Eolienne selon la revendication 14 ou 15, **caractérisé en ce que** les moyens de communication avec d'autres éoliennes comportent un réseau de données (21), en particulier Ethernet (22) et/ou un routeur (23).

17. Eolienne selon l'une quelconque des revendications 14 à 16, **caractérisé en ce que** les moyens de communication avec l'entrée de commande du parc éolien comportent une interface de données.
